(19) Europäisches Patentamt

European Patent Office

Office européen des brevets

(11) **EP 0 895 331 B1**

(12) **FASCICULE DE BREVET EUROPEEN**

(45) Date de publication et mention
de la délivrance du brevet:
**27.10.2004 Bulletin 2004/44**

(51) Int Cl.⁷: **H02H 9/02**

(21) Numéro de dépôt: **98401953.9**

(22) Date de dépôt: **30.07.1998**

(54) **Dispositif de protection d'une charge électrique et circuit d'alimentation comportant un tel dispositif**

Schutzvorrichtung für elektrische Last und Versorgungseinrichtung mit einer solchen Vorrichtung

Protection device for electrical load and power supply provided with such a device

(84) Etats contractants désignés:
**DE GB IT**

(30) Priorité: **01.08.1997 FR 9709872**

(43) Date de publication de la demande:
**03.02.1999 Bulletin 1999/05**

(73) Titulaire: **COMMISSARIAT A L'ENERGIE
ATOMIQUE
75015 Paris (FR)**

(72) Inventeur: **Giffard, Benoit
38000 Grenoble (FR)**

(74) Mandataire: **Poulin, Gérard et al
Société BREVATOME
3, rue du Docteur Lancereaux
75008 Paris (FR)**

(56) Documents cités:
**EP-A- 0 780 952**

**Description**

<u>Domaine technique</u>

La présente invention concerne un dispositif de protection d'une charge électrique et un circuit d'alimentation comportant un tel dispositif.

Le dispositif de l'invention peut être utilisé pour une large gamme de charges électriques. Toutefois, un domaine d'application privilégié est celui de la protection électrique des cartes et composants électriques et électroniques.

En particulier, le dispositif de l'invention vise à protéger une charge électrique contre une surtension ou un surcourant accidentel survenant dans un circuit d'alimentation de cette charge.

<u>Etat de la techhique antérieure</u>

Parmi les dispositifs connus de protection d'une charge, on distingue usuellement les dispositifs connectés en série avec la charge électrique et les dispositifs connectés en parallèle avec la charge électrique.

Un dispositif de protection connecté en parallèle avec une charge électrique est conçu généralement pour limiter ou annuler la tension à ses bornes, lorsque cette tension atteint une valeur prédéterminée. A titre d'exemple de tels dispositifs, on peut citer les diodes Transil et les thyristors Trisil (Marques déposées) de la Société SGS THOMSON ELECTRONICS.

Un dispositif de protection connecté dans un circuit en série avec la charge électrique à protéger, est généralement conçu pour limiter ou annuler le courant circulant dans le circuit, lorsque ce courant atteint une valeur prédéterminée. A titre d'exemple d'un tel dispositif, on peut citer les disjoncteurs électromécaniques équipant les tableaux électriques du réseau d'alimentation public de courant ou un disjoncteur tel que décrit dans le document EP0780952.

<u>Exposé de l'invention</u>

L'invention a pour but de proposer un dispositif de protection d'une charge électrique, susceptible d'être réalisé sous une forme miniaturisée et, éventuellement, sous la forme d'un circuit intégré dans un substrat semi-conducteur.

Un autre but est de proposer un tel dispositif dont le coût de fabrication est particulièrement réduit.

Un but de l'invention est aussi de proposer un dispositif capable de supporter des surtensions importantes par rapport à une tension de coupure prédéterminée.

Pour atteindre ces buts, l'invention a plus précisément pour objet un dispositif de protection d'une charge électrique, comprenant une branche de conduction reliant une borne d'entrée à une borne de sortie, la branche de conduction comportant en série :

- un canal d'un premier transistor de type "normalement conducteur", d'un premier type de conductivité,
- un canal d'un deuxième transistor de type "normalement conducteur", d'un deuxième type de conductivité opposé au premier type de conductivité,

et dans lequel la grille dudit premier transistor est reliée à la borne de sortie et la grille dudit deuxième transistor est reliée à la borne d'entrée par l'intermédiaire d'un troisième transistor du type "normalement conducteur" et du premier type de conductivité. La grille du troisième transistor est reliée à un noeud situé entre les canaux des premier et deuxième transistors.

On entend par charge électrique un ou plusieurs dispositifs électriques ou électroniques, susceptibles d'être parcourus par un courant électrique. Les dispositifs électriques ou électroniques peuvent comporter aussi bien des faibles consommateurs de courant, comme des cartes électroniques, que des forts consommateurs, tels que des moteurs électriques.

Par ailleurs, on entend par transistor "normalement conducteur" ("Normally-On") un transistor qui se trouve dans un état passant (conducteur) lorsque la tension appliquée entre sa grille et sa source ($V_{gs}$) est nulle et reste passant tant que cette tension reste supérieure à la tension de seuil du transistor (appelée aussi seuil de commutation).

Les premier et troisième transistors sont avantageusement des transistors haute tension, c'est-à-dire capables de supporter des tensions par exemple de quelques centaines de volts. Selon un choix particulier, les premier et troisième transistors peuvent être du type IGBT (Insulated Gate Bipolar Transistor) et le deuxième transistor peut être du type MOS, par exemple.

De préférence, les premier, deuxième et troisième transistors peuvent être choisis pour présenter respectivement des premier, deuxième et troisième seuils de commutation, tels que le troisième transistor demeure dans un mode passant tant qu'un courant traverse le premier et le deuxième transistors.

Dans ce mode de réalisation, l'arrêt du courant traversant le dispositif est contrôlé par le blocage de l'un des premier et deuxième transistors.

Le seuil de commutation du troisième transistor est choisi pour qu'il soit bloqué lorsque la tension ($V_{DD}$) appliquée entre les bornes d'entrée et de sortie est supérieure à une tension qui dégraderait la grille du deuxième transistor.

Ainsi, la grille du deuxième transistor ne subit pas la tension existant entre les bornes d'entrée et de sortie, quand celle-ci est trop élevée pour la grille du deuxième transistor.

Grâce à cette caractéristique, la grille du deuxième transistor est protégée et le dispositif est capable de supporter des tensions très importantes.

Selon un autre aspect de l'invention, le dispositif peut comporter en outre une diode Zener, polarisée en inverse, et reliant la grille du deuxième transistor à la borne de sortie.

La diode Zener permet d'éviter que la tension de grille du deuxième transistor, qui est flottante lorsque le troisième transistor est bloqué, ne prenne des valeurs trop importantes. En effet, la diode Zener permet d'écouler un éventuel courant de fuite du troisième transistor.

D'autres caractéristiques et avantages de l'invention ressortiront mieux de la description qui va suivre, en référence aux figures des dessins annexés. Cette description est donnée à titre purement illustratif et non limitatif. En particulier, les transistors utilisés dans la réalisation décrite ci-après sont de type MOS, mais, bien entendu, d'autres types de transistors peuvent être utilisés, tels que par exemple des transistors de type bipolaire ou MOS-bipolaire (IGBT par exemple).

Brève description des figures

- La figure 1 est un schéma électronique représentant une réalisation particulière du dispositif de protection de l'invention.
- La figure 2 est une caractéristique courant-tension du dispositif de la figure 1.
- La figure 3 est un schéma d'un circuit d'alimentation d'une charge utilisant le dispositif de protection de la figure 1.

Description détaillée d'une réalisation particulière de l'invention.

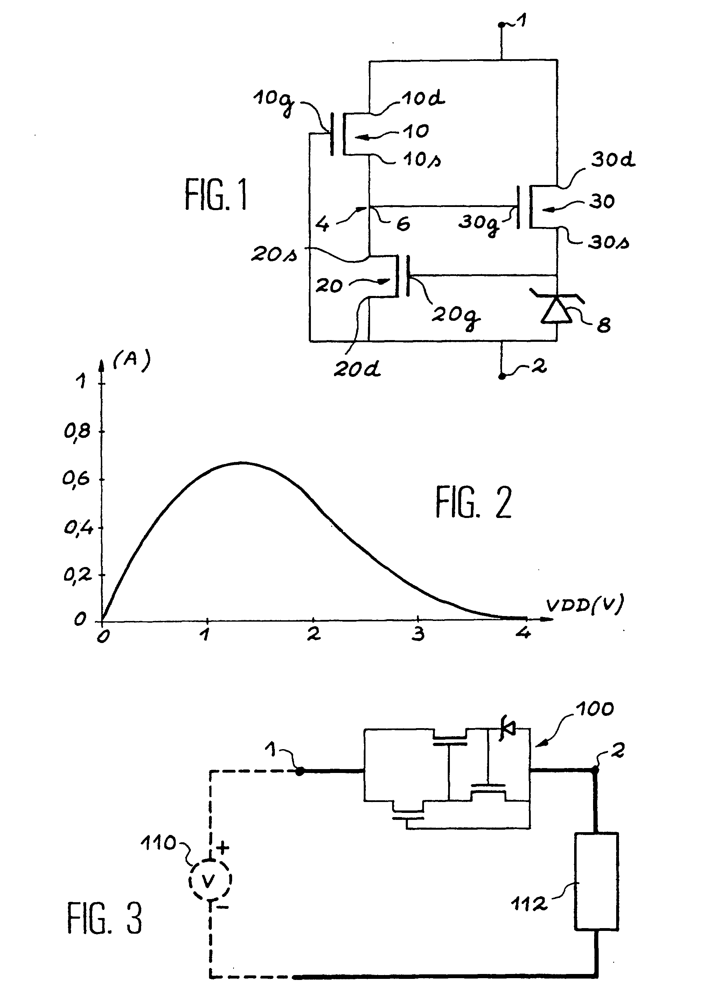

Les références 1 et 2 de la figure 1 désignent respectivement les bornes d'entrée et de sortie d'un dispositif conforme à l'invention. Dans la description qui suit, on suppose que la borne d'entrée 1 est une borne positive reliée à un potentiel positif noté $V_{DD}$, et que la borne de sortie 2 est une borne de masse reliée à un potentiel de masse fixé arbitrairement à 0 volt.

Une branche de conduction 4 comporte, dans l'ordre à partir de la borne d'entrée, le canal d'un premier transistor à effet de champ 10 et le canal d'un deuxième transistor à effet de champ 20.

Le premier transistor à effet de champ 10 est un transistor MOS (Metal-Oxyde-Semiconducteur) à canal N, ou NMOS, et présente une tension de seuil $V_{T10}$ négative. Le deuxième transistor à effet de champ 20 est un transistor PMOS, à canal P et présente une tension de seuil positive $V_{T20}$.

On rappelle qu'un transistor NMOS est conducteur si sa tension de grille, notée $V_{gs}$, est supérieure à sa tension de seuil, et qu'un transistor PMOS est conducteur si sa tension de grille est inférieure à sa tension de seuil.

Les premier et deuxième transistors 10, 20 sont des transistors "normalement conducteurs" et sont par conséquent dans l'état conducteur, ou passant, lorsque la tension mesurée entre leur grille et leur source est nulle.

Pour une meilleure lisibilité des figures, les références 10s, 20s, 10d, 20d et 10g, 20g désignent respectivement les sources, drains et grilles des premier et deuxième transistors.

Un troisième transistor 30, également du type NMOS, normalement conducteur, de tension de seuil négative $V_{T30}$, relie la grille 20g du deuxième transistor à la borne d'entrée 1. La grille 30g du troisième transistor est reliée à un noeud 6 situé entre les premier et deuxième transistors, et, plus précisément, entre les sources 10s et 20s des premier et deuxième transistors. Les source et drain du troisième transistor portent respectivement les références 30s et 30d.

Une diode Zener 8 relie également la grille 20g du deuxième transistor 20 à la borne de sortie 2.

Enfin, la grille 10g du premier transistor est directement reliée à la borne de sortie 2.

Dans le montage ci-dessus, on vérifie les relations suivantes :

$$V_{g10}=0$$

$$V_{g30} = \alpha V_{DD}$$

$$V_{g20} = V_{DD}$$

(si le troisième transistor est conducteur),

$$V_{s10} = \alpha V_{DD}$$

$$V_{s30} = V_{DD}$$

(si le troisième transistor est conducteur),

$$V_{s20} = \alpha V_{DD}.$$

Dans ces relations, $V_g$ et $V_s$ indiquent respectivement la tension de grille et de source et les indices 10, 20, 30 se réfèrent aux premier, deuxième et troisième transistors. Le terme $\alpha$ est tel que $0 \le \alpha \le 1$ et traduit l'état du potentiel du noeud 6, situé entre les premier et deuxième transistors, compris entre 0 volt (borne 2) et $V_{DD}$ (borne 1) par construction.

Lorsque la tension $V_{DD}$ appliquée à la borne d'entrée est faible, c'est-à-dire inférieure en valeur absolue aux tensions de seuil $V_{T10}$, $V_{T20}$ et $V_{T30}$, les premier, deuxième et troisième transistors sont conducteurs. Un courant circule alors entre les bornes d'entrée et de sortie, et par conséquent à travers une charge éventuellement reliée au dispositif. Le courant traverse les canaux des premier et deuxième transistors.

Si un appel de courant devient important, la tension $V_{DD}$ mesurée entre les bornes d'entrée 1 et de sortie 2 augmente.

Lorsque la tension $V_{DD}$ devient suffisamment importante, en valeur absolue, l'un des premier et deuxième transistors, ou les deux, deviennent bloqués. En effet, les seuils des premier, deuxième et troisième transistors sont préférentiellement choisis de telle façon que le troisième transistor reste conducteur aussi longtemps qu'un courant circule dans la branche 4 comportant les premier et deuxième transistors.

Lors du blocage de l'un des premier ou deuxième transistors (ou des deux) au moins l'une des conditions suivantes est vérifiée.

- $V_{gs10} = -\alpha.V_{DD} < V_{T10}$ préférentiellement si $\alpha$ est plus proche de 1.
- $V_{gs20} = V_{DD}(1-\alpha) > V_{T20}$ préférentiellement si $\alpha$ est plus proche de 0.

Le blocage de l'un au moins des premier et deuxième transistors 10, 20 entraîne l'arrêt du courant circulant dans la branche 4, c'est-à-dire du courant traversant le dispositif.

Lorsqu'aucun courant ne traverse le dispositif, la tension $V_{DD}$ peut augmenter jusqu'à des valeurs très élevées qui dépendent de la conception du dispositif et notamment du choix des composants.

Une tension élevée appliquée à la grille du deuxième transistor aurait pour effet d'altérer la couche d'oxyde de grille qui sépare la grille du canal de ce transistor.

Ainsi, le choix de la tension de seuil $V_{T30}$ du troisième transistor est telle que son blocage intervienne pour une tension $V_{DD}$ appliquée au dispositif, supérieure à la tension de blocage des premier et deuxième transistors, mais inférieure à une tension $V_{DD}$ qui dégraderait la grille du deuxième transistor. Ainsi, lorsque le troisième transistor est bloqué, la tension $V_{DD}$ appliquée au dispositif est reportée à ses bornes et la grille du deuxième transistor, devenue flottante, est protégée. Une tension plus importante peut alors être supportée aux bornes du dispositif.

La diode Zener 8 est prévue pour éviter que la tension flottante de la grille du deuxième transistor ne prenne des valeurs importantes, en écoulant vers la borne de sortie (masse) un éventuel courant de fuite du troisième transistor 30.

Le calcul du terme $\alpha$ lorsque la tension $V_{DD}$ atteint une valeur limite prédéterminée $V_{DDlim}$ est explicité ci-dessous.

On calcule $\alpha$ pour $V_{DD} = V_{T20} - V_{T10} = V_{DDlim}$

Si le premier transistor 10 est juste bloqué, avec $V_{gs10} = V_{T10}$, alors

$$V_{gs10}=V_{g10}-V_{s10}=0-\alpha V_{DD}=-\alpha[V_{T20}-V_{T10}]=V_{T10}$$

soit

$$\alpha = \frac{V_{T10}}{V_{T10} - V_{T20}}$$

et

$$(1 - \alpha) = \frac{-V_{T20}}{V_{T10} - V_{T20}}$$

Pour le deuxième transistor 20 on a alors :

$$V_{gs20} = V_{g20} - V_{s20} = V_{DD\,lim}(1 - \alpha)$$
$$= (V_{T20} - V_{T10})\left(\frac{-V_{T20}}{V_{T10}-V_{T20}}\right)$$
$$= V_{T20}$$

(ceci correspond au blocage du deuxième transistor 20).
Donc, les premier et deuxième transistors sont tous deux bloqués dans les conditions suivantes :

$$\alpha = \frac{V_{T10}}{V_{T10} - V_{T20}}$$

et

$$V_{DD}=V_{DDlim}=V_{T20}-V_{T10}.$$

On observe que la valeur de $\alpha$ ainsi établie est stable. En effet, si $\alpha$ augmente légèrement, le premier transistor 10 reste bloqué tandis que le deuxième transistor 20 devient conducteur, ce qui a pour effet de diminuer $\alpha$. Inversement si $\alpha$ diminue légèrement le deuxième transistor 20 reste bloqué tandis que le premier transistor devient conducteur, ce qui a pour effet d'augmenter $\alpha$.
Finalement, lorsque $V_{DD}$ atteint la valeur $V_{DDlim}$, a prend la valeur stable établie ci-dessus.
Dans une application particulière, on choisit les tensions de seuil des premier et deuxième transistors égales en valeur absolue, et inférieures en valeur absolue à la tension de seuil du troisième transistor.
Par exemple on choisit :

$$V_{T10}=-2,0V,$$

$$V_{T20}=+2,0V,$$

$$V_{T30}=-2,0V,$$

Ainsi, les valeurs de $V_{DDlim}$ et $\alpha$ sont respectivement $V_{DDlim} = +4,0V$, et $\alpha=0,5$ pour $V_{DD}=V_{DDlim}.$
Pour ce point de fonctionnement la relation suivante est vérifiée :

$$V_{gs30}=\alpha V_{DDlim}-V_{DDlim}=-2,0V.$$

Ainsi, la tension $V_{gs30}$ mesurée entre la grille et la source du troisième transistor n'est pas inférieure à sa tension de seuil.

Le troisième transistor, qui est du type NMOS dans l'exemple décrit, reste donc conducteur aussi longtemps qu'un courant traverse les premier et deuxième transistors.

La tension de mise en conduction de la diode Zener est choisie supérieure en valeur absolue à $V_{DDlim}$, soit par exemple 5 V.

La figure 2 indique une caractéristique courant-tension du dispositif réalisé conformément à l'exemple numérique indiqué ci-dessus.

Le courant, indiqué en ordonnée, est exprimé en Ampères, tandis que la tension, indiquée en abscisses est exprimée en volts.

On peut observer que le dispositif est conducteur pour des valeurs de $V_{DD}$ faibles. Le courant traversant le dispositif passe par un maximum puis est bloqué à partir de la valeur $V_{DD}=V_{DDlim}=V_{T20}-V_{T10}$.

La figure 3 montre un circuit d'alimentation d'une charge électrique comprenant un dispositif de protection tel que décrit ci-dessus.

Le circuit de protection est indiqué globalement avec la référence 100. Les références 110 et 112 désignent respectivement une source d'alimentation en énergie électrique et une charge à protéger.

La borne d'entrée 1 du dispositif de protection 100 est connectée à une borne positive de la source d'alimentation 110. La borne de sortie 2 est reliée à la charge électrique 112.

Ainsi, dans le circuit, le dispositif de protection 100 et la charge 112 sont connectés en série entre les bornes de la source d'alimentation en énergie.

Le dispositif de l'invention peut être réalisé avec un nombre réduit de composants discrets.

Toutefois, il est possible également de le réaliser sous une forme intégrée dans un substrat tel que, par exemple, un substrat de silicium.

Avantageusement, le dispositif de protection peut être intégré dans le même substrat qu'un circuit électronique qui constitue la charge à protéger.

**Revendications**

1. Dispositif de protection d'une charge électrique, comprenant une branche de conduction (4) reliant une borne d'entrée (1) à une borne de sortie (2), la branche de conduction comportant en série :

   - un canal d'un premier transistor (10) de type "normalement conducteur", d'un premier type de conductivité, et
   - un canal d'un deuxième transistor (20) de type "normalement conducteur" d'un deuxième type de conductivité opposé au premier type de conductivité,

   et dans lequel une grille (10g) dudit premier transistor (10) est reliée à la borne de sortie (2), et une grille (20g) du deuxième transistor (20) est reliée à la borne d'entrée (1) par l'intermédiaire d'un troisième transistor(30) du type "normalement conducteur" et du premier type de conductivité, le troisième transistor présentant une grille (30g) reliée à un noeud (6) situé entre les canaux des premier et deuxième transistors.

2. Dispositif selon la revendication 1, comportant en outre une diode Zener (8), polarisée en inverse, et reliant la grille du deuxième transistor (26) à la borne de sortie (2).

3. Dispositif selon la revendication 1, dans lequel les premier, deuxième et troisième transistors présentent respectivement des première, deuxième et troisième tensions de seuil ($V_{T10}$, $V_{T20}$, $V_{T30}$), choisies telles que le troisième transistor (30) demeure dans un état passant tant qu'un courant traverse le premier et le deuxième transistors.

4. Dispositif selon la revendication 3, dans lequel la tension de seuil du troisième transistor est choisie telle que le troisième transistor est bloqué lorsque la tension appliquée entre les bornes d'entrée et de sortie est supérieure à une tension de dégradation de la grille du deuxième transistor.

5. Dispositif selon la revendication 3, dans lequel les tensions de seuil des premier et deuxième transistors (10, 20) sont de signes opposés, sensiblement égales en valeur absolue, et inférieures en valeur absolue à la tension de seuil du troisième transistor (30).

6. Dispositif selon la revendication 1, dans lequel les premier et troisième transistors sont des transistors de type "haute tension".

7. Dispositif selon la revendication 1, dans lequel les premier et troisième transistors sont des transistors de type IGBT et le deuxième transistor est de type MOS.

8. Dispositif selon la revendication 1, dans lequel les premier, deuxième et troisième transistors sont des transistors MOS.

9. Dispositif selon la revendication 1, dans lequel la borne d'entrée est une borne positive, dans lequel les premier et troisième transistors sont des transistors de type N, et dans lequel le deuxième transistor est de type P.

10. Dispositif selon la revendication 1, réalisé sous la forme d'un circuit intégré.

11. Circuit d'alimentation d'une charge électrique comprenant une charge électrique (112) en série avec un dispositif (100) de protection, **caractérisé en ce que** le dispositif (100) de protection est conforme à l'une quelconque des revendications précédentes.


**Patentansprüche**

1. Schutzvorrichtung für eine elektrische Last mit einem Leitungszweig (4), der einen Eingangsanschluss (1) mit einem Ausgangsanschluss (2) verbindet, wobei der Leitungszweig in Reihe geschaltet umfasst:

   - einen Kanal eines ersten Transistors (10) des "normalerweise leitenden" Typs mit einem ersten Leitfähigkeitstyp, und
   - einen Kanal eines zweiten Transistors (20) des "normalerweise leitenden" Typs mit einem zweiten, dem ersten entgegengesetzten Leitfähigkeittyp,

   und bei der ein Gate (10g) des genannten ersten Transistors (10) mit dem Ausgangsanschluss (2) verbunden ist, und ein Gate (20g) des genannten zweiten Transistors (20) durch einen dritten Transistor (30) des "normalerweise leitenden" Typs des ersten Leitfähigkeitstyps mit dem Eingangsanschluss (1) verbunden ist, wobei der dritte Transistor ein Gate (30g) aufweist, das mit einem Knotenpunkt (6) verbunden ist, der sich zwischen den Kanälen des ersten und zweiten Transistors befindet.

2. Vorrichtung nach Anspruch 1, die außerdem eine Zener-Diode (8) mit Sperr-Vorspannung umfasst, die das Gate des zweiten Transistors (20) mit dem Ausgangsanschluss (2) verbindet.

3. Vorrichtung nach Anspruch 1, bei welcher der erste, zweite und dritte Transistor jeweils eine erste, zweite und dritte Schwellenspannung ($V_{T10}$, $V_{T20}$, $V_{T30}$) aufweist, die so gewählt wird, dass der dritte Transistor (30) in einem Durchlasszustand bleibt, solange ein Strom den ersten und den zweiten Transistor durchquert.

4. Vorrichtung nach Anspruch 3, bei welcher die Schwellenspannung des dritten Transistors so gewählt wird, dass der dritte Transistor gesperrt wird, wenn die zwischen dem Eingangs- und Ausgangsanschluss angelegte Spannung niedriger ist als eine Degradationsspannung des Gates des zweiten Transistors.

5. Vorrichtung nach Anspruch 3, bei welcher die Schwellenspannungen des ersten und zweiten Transistors (10, 20) bei entgegengesetzten Vorzeichen im Wesentlichen den gleichen Absolutwert haben und dabei einen niedrigeren Absolutwert als die Schwellenspannung des dritten Transistors (30) haben.

6. Vorrichtung nach Anspruch 1, bei welcher der erste und der dritte Transistor vom Typ "Hochspannungstransistoren" sind.

7. Vorrichtung nach Anspruch 1, bei welcher der erste und der dritte Transistor vom IGBT-Typ sind und der zweite Transistor vom MOS-Typ ist.

8. Vorrichtung nach Anspruch 1, bei welcher der erste, zweite und dritte Transistor MOS-Transistoren sind.

9. Vorrichtung nach Anspruch 1, bei welcher der Eingangsanschluss ein positiver Anschluss ist, bei welcher der erste und der dritte Transistor Transistoren des N-Typs sind, und bei welcher der zweite Transistor vom P-Typ ist.

10. Vorrichtung nach Anspruch 1, realisiert in Form einer integrierten Schaltung.

11. Versorgungsschaltung einer elektrischen Last, eine elektrische Last (112) umfassend, in Reihe geschaltet mit einer Schutzvorrichtung (100),
**dadurch gekennzeichnet, dass** die Schutzvorrichtung (100) einem der vorangehenden Ansprüche entspricht.

**Claims**

1. Device for the protection of an electrical load, comprising a conduction branch (4) connecting an input terminal (1) to an output terminal (2), the conduction branch having in series:

   - a channel of a first transistor (10) of the "normally on" type, of a first conductivity type, and
   - a channel of a second transistor (20) of the "normally on" type of a second conductivity type, opposite to the first conductivity type,

   and wherein a gate (10g) of said first transistor (10) is connected to the output terminal (2), and a gate (20g) of the second transistor (20) is connected to the input terminal (1) by means of a third transistor (30) of the "normally on" type and of the first conductivity type, the third transistor having a gate (30g) connected to a node (6) located between the channels of the first and second transistors.

2. Device according to claim 1, also having a reverse-biased Zener diode (8) connecting the gate of the second transistor (26) to the output terminal (2).

3. Device according to claim 1, wherein the first, second and third transistors respectively have first, second and third threshold voltages ($V_{T10}$, $V_{T20}$, $V_{T30}$), chosen in such a way that the third transistor (30) remains in the on state whilst a current flows through the first and second transistors.

4. Device according to claim 3, wherein the threshold voltage of the third transistor is chosen in such a way that the third transistor is inhibited when the voltage applied between the input and output terminals is lower than the voltage for damaging the gate of the second transistor.

5. Device according to claim 3, wherein the threshold voltages of the first and second transistors (10, 20) are of opposite signs, substantially equal in absolute value and lower in absolute value than the threshold voltage of the third transistor (30).

6. Device according to claim 1, wherein the first and third transistors are transistors of the "high voltage" type.

7. Device according to claim 1, wherein the first and third transistors are transistors of the IGBT type and the second transistor is of the MOS type.

8. Device according to claim 1, wherein the first, second and third transistors are MOS transistors.

9. Device according to claim 1, wherein the input terminal is a positive terminal, in which the first and third transistors are of the N-type and in which the second transistor is of the P-type.

10. Device according to claim 1, implemented in the form of an integrated circuit.

11. Power supply circuit of an electrical load comprising an electrical load (112) in series with a protection device (100),
**characterized in that** the protection device (100) is in accordance with claim 1.

FIG. 1

10g
10d
10
10ℴ
30d
30
4
6
30g
30ℴ
20ℴ
20
20g
8
20d
1
2

FIG. 2

(A)
1
0,8
0,6
0,4
0,2
0

0   1   2   3   4

VDD(V)

FIG. 3

100
1
2
110
+
V
-
112